# EUROPEAN PATENT SPECIFICATION

(11) **EP 3 239 037 B1**
(45) Date of publication and mention of the grant of the patent: **28.08.2019**
(21) Application number: 15872193.6
(22) Date of filing: 11.12.2015
(51) Int. Cl.: B63B 25/16, F17C 13/00

(54) **LIQUEFIED GAS CARRIER**
FLÜSSIGGASTRÄGER
TRANSPORTEUR DE GAZ LIQUÉFIÉ

(30) Priority: 26.12.2014 JP 2014266293
(43) Date of publication of application: 01.11.2017
(73) Proprietor: Kawasaki Jukogyo Kabushiki Kaisha, Kobe-shi, Hyogo 650-8670 (JP)
(72) Inventor: TAKATA, Hirotaka, Hyogo 673-8666 (JP); IWASAKI, Hidekazu, Hyogo 673-8666 (JP); SHINMURA, Nobuhiro, Hyogo 673-8666 (JP); ANDOH, Akihiro, Hyogo 650-8670 (JP); TAMOTO, Eiji, Hyogo 650-8670 (JP); TAKEDA, Hiroyuki, Hyogo 650-8670 (JP); AOKI, Kazunori, Hyogo 650-8670 (JP)
(74) Representative: Dehns
(86) International application number: PCT/JP2015/006205
(87) International publication number: WO 2016/103618

(56) References cited:
- JP-A- S5 371 365
- JP-A- S62 194 099
- JP-A- 2006 063 817
- JP-A- 2008 196 685
- JP-U- S57 199 042

## Description

### Technical Field

The present invention relates to a liquefied gas carrier including an engine using a liquefied gas as a fuel.

### Background Art

In an LNG carrier for transporting LNG (liquefied natural gas), for example, LNG, i.e., natural gas that has been cooled down, liquefied, and kept at about - 162°C, is stored in a cargo tank installed in the LNG carrier at near atmospheric pressure. The LNG carrier storing the LNG transports it to a destination port of unloading. While the LNG carrier is out at sea, a boil off gas is generated due to heat that is transferred into the cargo tank from the outside. As a result, the pressure in the tank increases. For this reason, it is necessary to discharge the boil off gas from the cargo tank. If the discharged boil off gas is simply combusted, it is a waste of the gas. Therefore, utilization of the discharged boil off gas as a fuel of the main and auxiliary engines of the LNG carrier, and re-liquefying and returning the discharged boil off gas into the cargo tank, are currently under consideration.

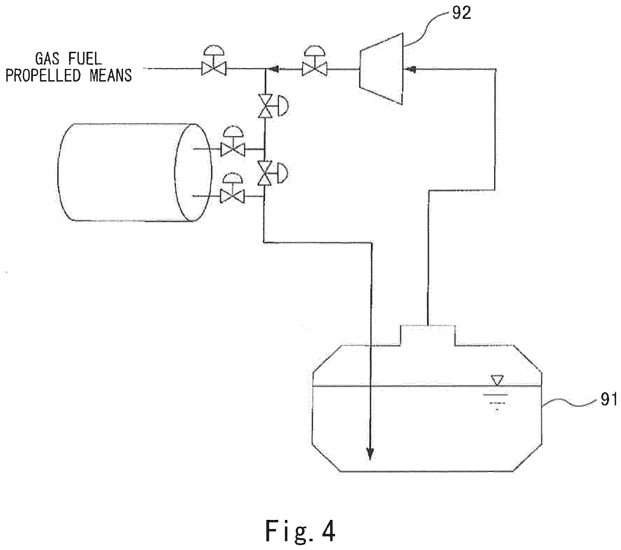

For example, Japanese Laid-Open Patent Application Publication No. 2008-196685 (hereinafter, "Patent Literature I") discloses an LNG carrier including fuel gas propelled means that utilizes a boil off gas as a propellant fuel (see Fig 4). In the LNG carrier, the boil off gas generated in a cargo tank 91 is pressure-fed to the fuel gas propelled means by using a compressor 92. In this manner, increase in the pressure in the cargo tank 91 is suppressed, and also, the pressure-fed boil off gas is utilized by the fuel gas propelled means. JP S 5371365 discloses a method for stirring gas within a low temperature liquefied gas tank.

### Citation List

### Patent Literature

PTL 1: Japanese Laid-Open Patent Application Publication No. 2008-196685

### Summary of Invention

### Technical Problem

When such an LNG carrier utilizing the boil off gas as a fuel is operated with an extremely low engine load or the engine load is reduced rapidly, such as when the ship anchors, when steering the ship within a harbor, when the ship navigates through a canal, or when the engine is started, the boil off gas in the tank is supplied to the engine more than necessary. As a result, the pressure at the downstream side of the compressor increases due to the excess boil off gas although increase in the pressure in the tank can be avoided. As shown in Fig 4, Patent Literature 1 discloses compressing the boil off gas and then supplying the compressed boil off gas to the lower part of the cargo tank 91, in which part the temperature is relatively low. However, in order to supply the boil off gas to the lower part of the cargo tank 91 when the cargo tank 91 is fully loaded with LNG, it is necessary to increase the pressure of the boil off gas so as to exceed the high pressure head at full loading, and thus it is necessary to increase the power of the compressor.

The present invention has been made in view of the above, and an object of the present invention is to provide a liquefied gas carrier capable of returning the excess gas to the tank while suppressing increase in the power of the compressor.

### Solution to Problem

In order to solve the above-described problems, the present invention provides a liquefied gas carrier including: a tank storing a liquefied gas; a gas fueled engine, to which a boil off gas is supplied as a fuel, the boil off gas being generated when the liquefied gas vaporizes in the tank; a gas supply line, through which the boil off gas is supplied from the tank to the gas fueled engine; a gas compressor disposed on the gas supply line and configured to pressure-feed the boil off gas to the gas fueled engine; a gas return line, through which an excess gas that has not been supplied through the gas supply line to the gas fueled engine is returned to the tank; and a gas return valve configured to open and close the gas return line. The gas return line includes an excess gas spouting portion provided with an excess gas spouting outlet positioned in a central region of the tank in a height direction, the excess gas spouting portion being configured to spout the excess gas from the excess gas spouting outlet into the central region of the tank.

The "central region of the tank in a height direction" herein refers to a combined region of a "second region" and a "third region" among four internal regions, i.e., "first region", "second region", "third region", and "fourth region", of the tank equally divided in the height direction, and these regions are the highest, the second highest, the third highest, and the lowest regions, respectively.

According to the present invention, the excess gas spouting portion is positioned in the central region of the tank in the height direction. Therefore, even when the tank is in a fully loaded state, the pressure head at the excess gas spouting portion is low, and the excess gas can be spouted into a liquid layer in the tank while suppressing increase in the power of the compressor. The excess gas spouted into the liquid layer is condensed by the coldness of the LNG. As a result, the problem of increase in the pressure in the tank hardly occurs. When the tank is in an unloaded state, the excess gas is spouted into a gaseous layer in the tank. When the tank is in the unloaded state, since the amount of excess gas is sufficiently small relative to the volume of the tank, the problem of increase in the pressure in the tank does not occur. Thus, both in a case where the tank is in the fully loaded state and in a case where the tank is in the unloaded state, the excess gas can be returned to the tank with small compressor power while avoiding rapid increase in the tank pressure.

In the above liquefied gas carrier, the tank may include a pipe tower extending from an upper part of the tank to a lower part of the tank, and a downstream part of the gas return line may be supported by the pipe tower. According to this configuration, since the downstream part of the gas return line can be supported by the pipe tower, it is not necessary to additionally equip the tank with equipment for supporting the gas return line, and thereby the manufacturing cost can be reduced.

In the above liquefied gas carrier, the downstream part of the gas return line may include an excess gas supply portion that is inserted in the pipe tower and that extends along the pipe tower from the upper part to a central part of the tank. The excess gas spouting portion may extend from a downstream side of the excess gas supply portion, and spout the excess gas to outside of the pipe tower. According to this configuration, since the gas return line is disposed in the pipe tower, the gas return line as well as other piping passing through the pipe tower can be protected from impact shocks that are caused by swinging of the liquefied gas in the tank. Moreover, since the excess gas spouting portion is positioned outside the pipe tower, the excess gas can be brought into contact with a large amount of liquefied gas outside the pipe tower, and thereby the condensation of the excess gas can be facilitated.

In the above liquefied gas carrier, the excess gas spouting portion may extend along an outer peripheral surface of the pipe tower. According to this configuration, a bending moment exerted on the excess gas spouting portion due to swinging of the liquefied gas in the tank can be suppressed, and thereby failure risks can be reduced.

In the above liquefied gas carrier, the excess gas spouting portion may be positioned in a region in the tank, in which region a downward flow of the liquefied gas is present when the tank is in a fully loaded state. According to this configuration, since the excess gas spouted from the excess gas spouting portion flows together with the downward flow in the tank, the excess gas will not rise to reach the gaseous layer, and thereby the condensation of the excess gas returned into the tank can be facilitated.

The tank may be a MOSS tank. This configuration is particularly useful, because this configuration makes it possible to utilize the pipe tower to support the downstream part of the gas return line and facilitate the condensation of the excess gas by utilizing the downward flow in the tank.

These functional advantages are particularly useful in a case where the gas fueled engine is a marine main engine of the liquefied gas carrier, because increase in the pressure at the downstream side of the compressor can be avoided when the engine is operated at an extremely low load or when the engine load is reduced rapidly.

### Advantageous Effects of Invention

According to the present invention, in the liquefied gas carrier, the excess gas can be returned to the tank while suppressing increase in the power of the compressor.

### Brief Description of Drawings

Fig. 1 shows a schematic configuration of a gas fuel supply system of a liquefied gas carrier according to Embodiment 1 of the present invention.
Fig 2A is a schematic sectional view of a MOSS tank of the liquefied gas carrier according to Embodiment 1 of the present invention, showing the MOSS tank in a fully loaded state.
Fig 2B is a schematic sectional view of the MOSS tank of the liquefied gas carrier according to Embodiment 1 of the present invention, showing the MOSS tank in an unloaded state.
Fig 3A is a schematic top sectional view of an excess gas spouting portion of the liquefied gas carrier according to Embodiment 1 of the present invention.
Fig 3B is a schematic front view of the excess gas spouting portion of the liquefied gas carrier according to Embodiment 1 of the present invention.
Fig 4 shows a schematic configuration of a fuel supply system of a conventional liquefied gas carrier.

### Description of Embodiments

### (Embodiment 1)

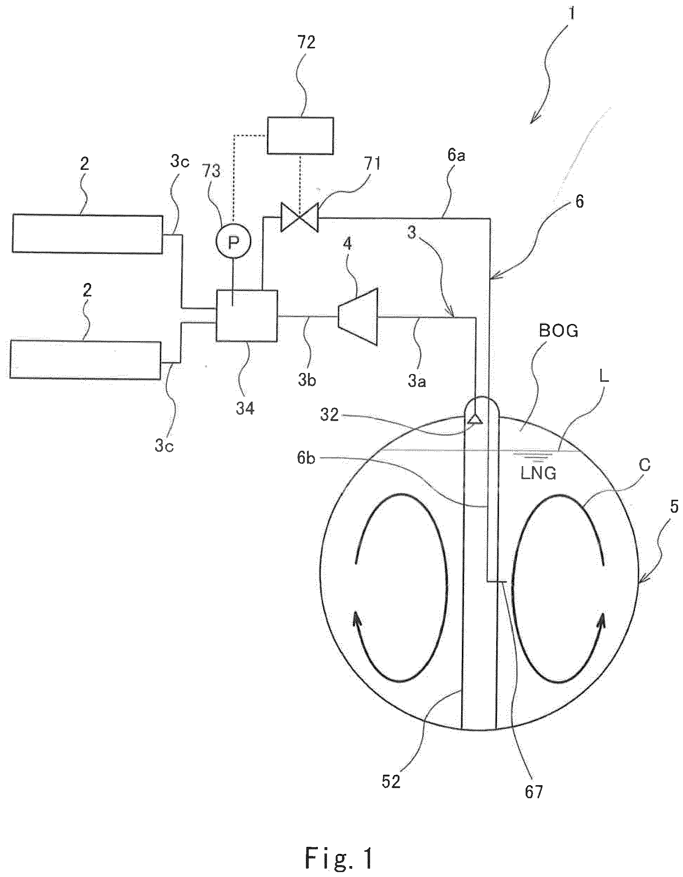

Hereinafter, Embodiment 1 of the present invention is described with reference to the drawings. Fig 1 shows a schematic configuration of a gas fuel supply system of a liquefied gas carrier according to Embodiment 1 of the present invention. An LNG carrier 1 (the liquefied gas carrier of the present invention) includes a plurality of tanks 5 storing LNG. The LNG carrier 1 includes two gas fueled engines 2, to which a boil off gas is supplied as a fuel, the boil off gas being generated when the LNG vaporizes in each tank 5. The LNG carrier 1 further includes: a gas supply line 3, through which the boil off gas is supplied from the tank 5 to the gas fueled engines 2; and a gas compressor 4 configured to pressure-feed the boil off gas to the gas fueled engines 2.

In the present embodiment, the gas fueled engines 2 are gas engines installed as main propulsion engines of the LNG carrier. Each of the gas fueled engines 2 may be a dual fuel engine capable of utilizing both a heavy oil fuel and a gas fuel, or may be a steam turbine engine with a boiler, or may be an engine intended for generating electric power. In the present embodiment, the number of gas fueled engines 2 is two. However, as an alternative, the number of gas fueled engines 2 may be one or three or more.

The tank 5 is a thermally insulating tank capable of keeping an extremely low temperature state so that the LNG can be kept in a liquid state at about -162°C under atmospheric pressure. In the present embodiment, the tank 5 is a MOSS tank, which is one type of tank installed in the hull of a ship that transports liquefied natural gas. The MOSS tank is a spherical tank independent of the hull, and guarantees sufficient strength only by the tank itself. The tank 5 is supported by the hull via a skirt (not shown), which is a circular cylindrical tank-supporting unit made of metal.

A pipe tower 52 is provided in the central part of the tank 5, the central part connecting between the upper end and the lower end of the tank 5. The pipe tower 52 is a circular cylindrical tower. A plurality of liquid cargo pipes for loading or discharging the LNG into or from the tank 5, a plurality of spray pipes for pre-cooling the tank, a liquid level gauge, electrical wiring (which are not shown), and so forth are provided inside the pipe tower 52. The pipe tower 52 is intended for protecting these internal components from loads that are caused by movement of the liquid in the tank. Upper and lower side walls of the pipe tower 52 are provided with openings (not shown), and the LNG and boil off gas are allowed to pass through these openings. Since the LNG passes through these openings, a liquid level L is uniform between the inside and outside of the pipe tower 52, and also, the internal pressure and external pressure of the pipe tower 52 are evened out.

The tank 5 is covered with a thermal insulating material, and thereby an extremely low temperature state of the inside of the tank 5 is maintained. However, heat still enters the inside of the tank 5 while the LNG carrier 1 is out at sea. Due to the heat, part of the LNG naturally vaporizes to become a boil off gas, and the boil off gas is accumulated in the upper part of the tank 5. The boil off gas accumulated in the upper part of the tank is supplied to the gas fueled engines 2 via the gas supply line 3 so as to utilize the boil off gas as a gas fuel of the gas fueled engines 2.

The gas supply line 3 is intended for supplying the boil off gas from the tank 5 to the gas fueled engines 2, and is piping, for example. The upstream end of the gas supply line 3 is provided with a gas suction opening 32. The gas suction opening 32 is disposed at the upper part of the tank 5 so that even when the tank 5 is in a fully loaded state, the boil off gas in the upper part of the tank 5 can be sucked through the gas suction opening 32. The gas compressor 4 is disposed on the gas supply line 3 at a position downstream of the gas suction opening 32. A gas header 34 is disposed downstream of the gas compressor 4. In a case where the number of gas fueled engines 2 is two or more, the gas supply line 3 includes a plurality of branch passages 3c extending from the gas header 34 to the respective gas fueled engines 2.

The gas compressor 4 compresses the boil off gas and supplies the compressed boil off gas to the gas fueled engines 2. The boil off gas that is sucked through the gas suction opening 32 is fed to the gas compressor 4 through an upstream part 3a of the gas supply line 3, and then compressed by the gas compressor 4. Thereafter, the compressed boil off gas is fed from the gas compressor 4 to the gas header 34 through a middle part 3b of the gas supply line 3, the middle part 3b extending to the gas header 34. The boil off gas that has reached the gas header 34 is fed to the two gas fueled engines 2, and is used as a gas fuel by each of the gas fueled engines 2.

The LNG carrier 1 shown in Fig 1 further includes: a gas return line 6, through which an excess gas that has not been supplied through the gas supply line 3 to the gas fueled engines 2 is returned to the tank 5; and a gas return valve 71 configured to open and close the gas return line 6. The term "excess gas" herein means the boil off gas that has been pressure-fed to the downstream side of the gas compressor 4 but has not been supplied to the gas fueled engines 2.

The gas return line 6 is piping, for example. The upstream end of the gas return line 6 is coupled to the gas header 34. A downstream part 6b of the gas return line 6 is supported by the pipe tower 52 of the tank 5, and inserted through the top of the pipe tower 52 to extend to the central part of the tank 5. In the description hereinafter, a part of the gas return line 6, the part being positioned in the tank 5, is referred to as "the downstream part 6b of the gas return line 6", and the remaining part of the gas return line 6 is referred to as "the upstream part 6a of the gas return line 6".

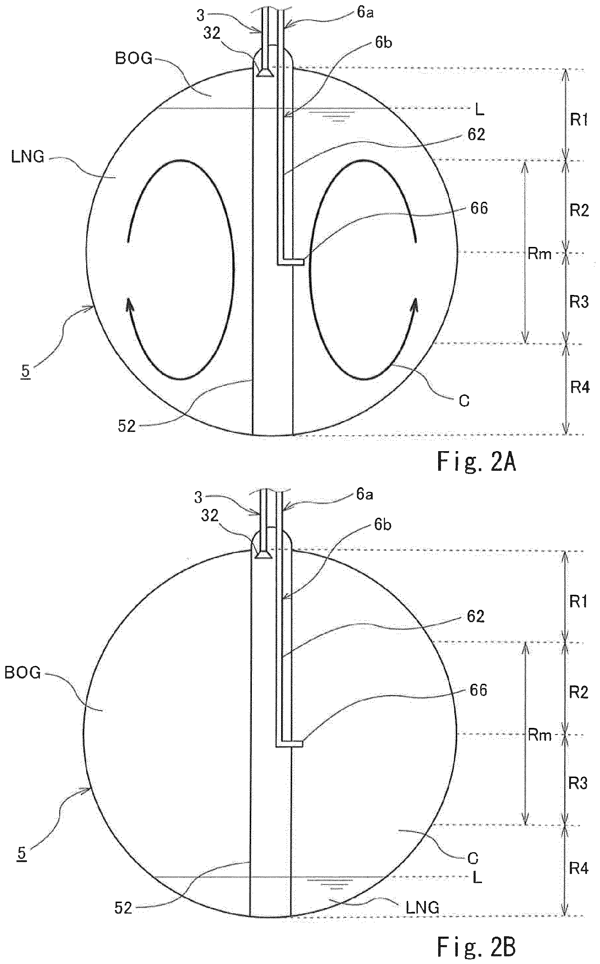

As shown in Fig 2A and Fig 2B, the downstream part 6b of the gas return line 6 includes: an excess gas supply portion 62 supplying the excess gas; and an excess gas spouting portion 66 provided with an excess gas spouting outlet 67.

The excess gas supply portion 62 is inserted in the pipe tower 52, and extends along the pipe tower 52 from the upper part to the central part of the tank 5. The upper end of the excess gas supply portion 62 is continuous with the upstream part 6a of the gas return line 6. The lower end of the excess gas supply portion 62 is bent toward the outside of the pipe tower 52, and supported by a support member that is not shown. The excess gas supply portion 62 supplies the excess gas fed from the upstream part 6a of the gas return line 6 to the central part of the tank.

The downstream side of the excess gas supply portion 62 is bent and extends toward the outside of the pipe tower 52, passes through a hole 53 formed through the peripheral portion of the pipe tower 52 to extend through the side wall of the pipe tower 52, and is continuous with the excess gas spouting portion 66.

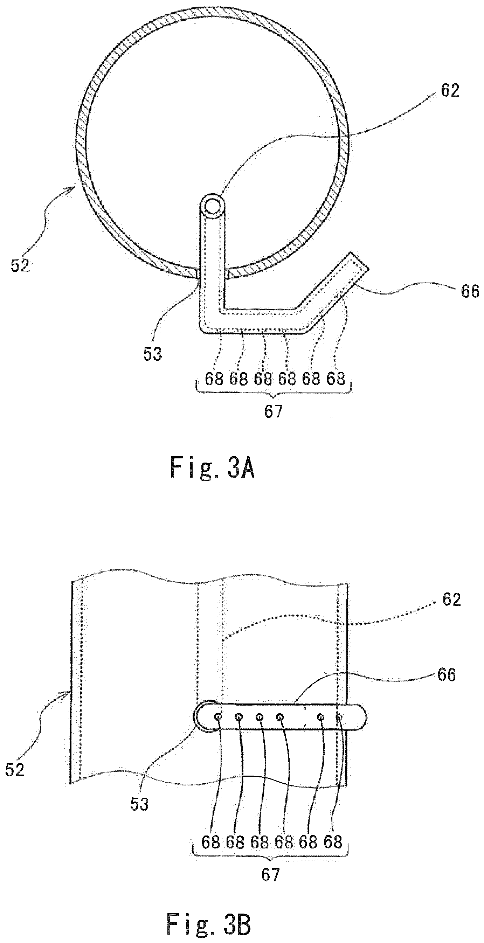

The excess gas spouting portion 66 extends circumferentially along the outer peripheral surface of the pipe tower 52. The excess gas spouting portion 66 is a portion curved along the outer peripheral surface of the pipe tower 52, and may be made up of a plurality of straight portions as shown in Fig 3A. The length of the excess gas spouting portion 66 is not limited to the one shown in Fig 3A. The excess gas spouting portion 66 may have a length that corresponds to, for example, the half or more of the circumference of the pipe tower 52, and may be fixed by a different support member. The excess gas spouting portion 66 is not limited to a configuration in which the downstream end of the excess gas supply portion 62 is continuous with an end of the excess gas spouting portion 66. For example, the downstream end of the excess gas supply portion 62 may be continuous with a central part of the excess gas spouting portion 66, and from the central part, the excess gas spouting portion 66 may extend circumferentially in both the clockwise direction and the counterclockwise direction along the outer peripheral surface of the pipe tower 52.

As shown in Fig 3A and Fig 3B, the excess gas spouting portion 66 is provided with the excess gas spouting outlet 67, which is configured to spout the boil off gas in the radial direction from the central axis of the pipe tower 52. The excess gas spouting outlet 67 is formed by a plurality of through-holes 68, which are arranged at predetermined intervals in the circumferential direction of the pipe tower 52. Preferably, the diameter of the through-holes 68 is made as small as possible so that bubbles of the excess gas spouted from the through-holes 68 will be small and condensation of the LNG in the tank will be facilitated.

In a case where the excess gas spouting portion 66 is positioned inside the pipe tower 52, the excess gas comes into contact only with the LNG inside the pipe tower 52, causing increase in the temperature of the LNG inside the pipe tower 52. In this case, condensation of the excess gas is not facilitated well. However, in the present embodiment, the excess gas spouting portion 66 is positioned outside the pipe tower 52. This allows the excess gas to come into contact with a large amount of liquefied gas outside the pipe tower 52, making it possible to facilitate the condensation of the excess gas.

Desirably, the excess gas spouting portion 66 is disposed near the pipe tower 52. The reason for this is that the more distant the excess gas spouting portion 66 is from the pipe tower 52, the greater the load applied to the excess gas spouting portion 66. Moreover, by disposing the excess gas spouting portion 66 near the pipe tower 52, the excess gas spouting outlet 67 can be positioned on a downward flow of the LNG in the tank 5, and thereby condensation of the excess gas can be facilitated as described below. In the description herein, the expression "near" the pipe tower 52 means that the distance of the excess gas spouting portion 66 from the pipe tower 52 is in such a range that the excess gas spouting portion 66 can bear the load applied thereto, and in the distance range, the downward flow of the LNG in the tank 5 is present.

As shown in Fig 2A and Fig 2B, the excess gas spouting outlet 67, which is the downstream end of the gas return line 6, is positioned in a central region Rm of the tank 5 in the height direction. The central region Rm is a combined region of a second region R2 and a third region R3, which are the second and third highest regions among four regions of the tank 5 equally divided in the height direction.

The gas return valve 71 is connected to a controller 72, and opens and closes the gas return line 6. The controller 72 is connected to a pressure meter 73 provided on the gas header 34. The pressure meter 73 is intended for measuring a supply pressure from the gas compressor 4. The controller 72 is operable to set allowable pressure values in advance. Normally, the gas return valve 71 is closed. If a pressure value transmitted from the pressure meter 73 to the controller 72 is greater than an allowable upper limit value set by the controller 72, the controller 72 opens the gas return valve 71 and starts a gas return operation. If a pressure value transmitted from the pressure meter 73 to the controller 72 is less than an allowable lower limit value set by the controller 72, the controller 72 closes the gas return valve 71 and stops the gas return operation. The gas return valve 71 is a pressure regulating valve. The degree of opening of the gas return valve 71 is determined by PID control and controlled such that the gas header pressure is kept to a value set in advance. The position at which the pressure meter 73 is provided is not limited to the gas header 34, but may be any position between the gas compressor 4 and the gas fueled engines 2, so long as the pressure of the excess gas is measurable at the position.

The gas return valve 71 may be controlled based on a signal different from a pressure value. For example, the gas return valve 71 may be configured to open when a particular phenomenon occurs, in which a sudden change in a gas flow rate is expected, such as an engine stop, regardless of the pressure at the time.

When the gas return valve 71 opens, the excess gas is supplied to the tank 5 through the gas return line 6. However, in the LNG carrier 1, there is a case where the tank 5 is fully loaded with LNG (i.e., in a fully loaded state) and also a case where the tank 5 is loaded with almost no LNG (i.e., in an unloaded state). Accordingly, there is a case where the excess gas is spouted into a liquid layer and also a case where the excess gas is spouted into a gaseous layer. The gas return operation performed when the tank 5 is in the fully loaded state and the gas return operation performed when the tank 5 is in the unloaded state are described below with reference to Fig 2A and Fig 2B.

Fig 2A is a schematic sectional view of the tank 5, showing the tank 5 in the fully loaded state. Generally speaking, while an LNG carrier is transporting LNG from a place of gas production to a place of gas consumption, the LNG storage tank installed in the LNG carrier is fully loaded with the LNG. In the present embodiment, as one example, the "fully loaded state" refers to a state where about 98.5% of the capacity of the tank 5 is filled with the LNG. That is, when the tank 5 is in the fully loaded state, about 98.5% of the inside of the tank 5 is a liquid layer, and about 1.5% of the inside of the tank 5 is a gaseous layer. The boil off gas, which is generated when the LNG naturally vaporizes, is present in the gaseous layer in the tank 5.

As shown in Fig 2A, when the tank 5 is in the fully loaded state, the liquid level L of the LNG is in a first region R1, which is the highest region among the four regions of the tank 5 equally divided in the height direction. In the LNG carrier 1 according to the present embodiment, the excess gas spouting outlet 67, which is the downstream end of the gas return line 6, is positioned in the second region R2 or third region R3 of the tank 5. Accordingly, when the tank 5 is in the fully loaded state, the excess gas is spouted into the liquid layer in the tank, and thereby the excess gas can be condensed. When the tank 5 is in the fully loaded state, since the volume of the gaseous layer in the tank is small, there is a problem that the tank pressure increases excessively if the excess gas is spouted into the gaseous layer in the tank. However, in the present embodiment, when the tank 5 is in the fully loaded state, the excess gas is spouted into the liquid layer in the tank, and the excess gas spouted into the liquid layer is condensed by the coldness of the LNG. Thus, the problem of increase in the tank pressure can be avoided. Moreover, compared to a case where the excess gas spouting outlet 67 is positioned near the bottom of the fully loaded tank (i.e., positioned in a fourth region R4), the pressure head is lower and the excess gas can be returned to the tank with less compressor power.

In order to perform the gas return operation when the tank 5 is in the fully loaded state, the LNG that fills the gas return line 6 needs to be pushed away, otherwise the excess gas cannot be supplied to the tank 5. For this reason, there is a time lag between opening the gas return valve 71 for starting the gas return operation and actually supplying the excess gas to the tank 5. In a case where the excess gas is supplied near the bottom of the fully loaded tank 5 (i.e., supplied to the fourth region R4), this time lag is long, which may interfere with the control of the pressure of the gas header 34. In this respect, by supplying the excess gas to the central region Rm of the tank 5, the time lag is advantageously shortened.

As shown in Fig 2A, the LNG convects in the tank 5, and a downward flow is present in the central part of the tank. In the LNG carrier 1 according to the present embodiment, the excess gas spouting portion 66 is disposed in the tank at a position where the downward flow is present. Since the excess gas spouted from the excess gas spouting portion 66 flows together with the downward flow in the tank, the excess gas will not rise to reach the gaseous layer, and thereby the condensation of the excess gas can be facilitated.

Fig 2B is a schematic sectional view of the tank 5, showing the tank 5 in the unloaded state. Generally speaking, while an LNG carrier is navigating from a place of gas consumption to a place of gas production, the LNG storage tank installed in the LNG carrier is in the unloaded state. In the present embodiment, as one example, the "unloaded state" refers to a state where about 1.5% of the capacity of the tank 5 is filled with the LNG. That is, when the tank 5 is in the unloaded state, about 1.5% of the inside of the tank is a liquid layer, and about 98.5% of the inside of the tank is a gaseous layer. Similar to the case of the fully loaded state, the boil off gas, which is generated when the LNG naturally vaporizes, is present in the gaseous layer in the tank.

As shown in Fig 2B, when the tank 5 is in the unloaded state, the liquid level L of the LNG is in the fourth region R4, which is the lowest region among the four regions of the tank 5 equally divided in the height direction. In the LNG carrier 1 according to the present embodiment, the excess gas spouting outlet 67, which is the downstream end of the gas return line 6, is positioned in the second region R2 or third region R3 of the tank 5. Accordingly, when the tank 5 is in the unloaded state, the excess gas is spouted into the gaseous layer in the tank. When the tank 5 is in the unloaded state, since the volume of the gaseous layer in the tank is sufficiently large relative to the amount of excess gas spouted out of the excess gas spouting outlet, the problem that the tank pressure increases excessively when the excess gas is spouted into the gaseous layer in the tank does not occur. Thus, both in a case where the tank 5 is in the fully loaded state and in a case where the tank 5 is in the unloaded state, the excess gas can be returned to the tank 5 with small compressor power while avoiding rapid increase in the tank pressure.

### (Other Embodiments)

It is not essential that the downstream part of the gas return line be supported by the pipe tower of the MOSS tank as in the above-described embodiment. However, it is more preferable to support the downstream part of the gas return line by the pipe tower, because if the downstream part of the gas return line can be supported by the pipe tower, it is not necessary to additionally equip the tank with equipment for supporting the gas return line, and thereby the manufacturing cost can be reduced. In the above-described embodiment, the tank installed in the LNG carrier is a MOSS tank. However, the tank installed in the LNG carrier is not limited to a MOSS tank, but may be, for example, a membrane type tank.

In the above-described embodiment, the gas fueled engine is described as a main propulsion engine of the liquefied gas carrier. Alternatively, the gas fueled engine may be, for example, a marine auxiliary engine that is a gas fueled engine intended for electric power generation. However, the present invention is particularly useful in a case where the gas fueled engine is a marine main engine of the LNG carrier, because increase in the pressure at the downstream side of the compressor can be avoided when the engine is operated at an extremely low load or when the engine load is reduced rapidly.

### Industrial Applicability

The present invention is useful as an LNG carrier that utilizes, for the purpose of environmental load reduction, the LNG transported thereby as a fuel of its main propulsion engine.

### Reference Signs List

- 1: LNG carrier
- 2: gas fueled engine
- 3: gas supply line
- 34: gas header
- 4: gas compressor
- 5: tank
- 52: pipe tower
- 6: gas return line
- 6a: upstream part of the gas return line
- 6b: downstream part of the gas return line
- 62: excess gas supply portion
- 66: excess gas spouting portion
- 68: through-hole
- 71: gas return valve
- BOG: boil off gas
- C: convection of liquefied gas in the tank
- L: liquid level of liquefied gas in the tank
- LNG: liquefied natural gas
- Rm: central region
- R1: first region
- R2: second region
- R3: third region
- R4: fourth region

## Claims

1. A liquefied gas carrier (1) comprising:
a tank (5) storing a liquefied gas;
a gas fueled engine (2), to which a boil off gas is supplied as a fuel, the boil off gas being generated when the liquefied gas vaporizes in the tank;
a gas supply line (3), through which the boil off gas is supplied from the tank to the gas fueled engine;
a gas compressor (4) disposed on the gas supply line and configured to pressure-feed the boil off gas to the gas fueled engine;
a gas return line (6), through which an excess gas that has not been supplied through the gas supply line to the gas fueled engine is returned to the tank; and
a gas return valve (71) configured to open and close the gas return line, **characterized in that**:
the gas return line includes an excess gas spouting portion (66) provided with an excess gas spouting outlet (67) positioned in a central region (Rm) of the tank in a height direction, the excess gas spouting portion being configured to spout the excess gas from the excess gas spouting outlet into the central region of the tank.

2. The liquefied gas carrier (1) according to claim 1, wherein
the tank (5) includes a pipe tower (52) extending from an upper part of the tank to a lower part of the tank, and
a downstream part (6b) of the gas return line (6) is supported by the pipe tower.

3. The liquefied gas carrier (1) according to claim 2, wherein
the downstream part (6b) of the gas return line (6) includes an excess gas supply portion (62) that is inserted in the pipe tower (52) and that extends along the pipe tower from the upper part to a central part of the tank (5), and
the excess gas spouting portion (66) extends from a downstream side of the excess gas supply portion, and spouts the excess gas to outside of the pipe tower.

4. The liquefied gas carrier (1) according to claim 2 or 3, wherein
the excess gas spouting portion extends along an outer peripheral surface of the pipe tower (52).

5. The liquefied gas carrier (1) according to any one of claims 1 to 4, wherein
the excess gas spouting portion (66) is positioned in a region in the tank (5), in which region a downward flow of the liquefied gas is present when the tank is in a fully loaded state.

6. The liquefied gas carrier (1) according to any one of claims 1 to 5, wherein
the tank (5) is a MOSS tank.

7. The liquefied gas carrier (1) according to any one of claims 1 to 6, wherein
the gas fueled engine (2) is a marine main engine of the liquefied gas carrier (1).

## Patentansprüche

1. Flüssiggastanker (1), umfassend:
einen Tank (5), in dem Flüssiggas gelagert ist;
einen gasbetriebenen Motor (2), dem ein Abdampf als Kraftstoff zugeführt wird, wobei der Abdampf erzeugt wird, wenn das Flüssiggas in dem Tank verdampft;
eine Gaszuführleitung (3), durch die der Abdampf aus dem Tank dem gasbetriebenen Motor zugeführt wird;
einen Gasverdichter (4), der an der Gaszuführleitung angeordnet ist und dazu konfiguriert ist, dem gasbetriebenen Motor den Abdampf unter Druck zuzuführen;
eine Gasrückführleitung (6), durch die ein Überschussgas, das nicht durch die Gaszuführleitung dem gasbetriebenen Motor zugeführt wurde, zum Tank zurückgeführt wird; und
ein Gasrückschlagventil (71), das zum Öffnen und Schließen der Gasrückführleitung konfiguriert ist, **dadurch gekennzeichnet,**
**dass**:
die Gasrückführleitung einen Überschussgasausstoßabschnitt (66) beinhaltet, der mit einem in einem Mittelbereich (Rm) des Tanks in einer Höhenrichtung angeordneten Überschussgasausstoßauslass (67) ausgestattet ist, wobei der Überschussgasausstoßabschnitt dazu konfiguriert ist, das Überschussgas von dem Überschussgasausstoßauslass in den Mittelbereich des Tanks auszustoßen.

2. Flüssiggastanker (1) nach Anspruch 1, wobei
der Tank (5) einen Rohrleitungsturm (52) beinhaltet, der sich von einem oberen Abschnitt des Tanks zu einem unteren Abschnitt des Tanks erstreckt, und
ein strömungsabwärtiger Abschnitt (6b) der Gasrückführleitung (6) durch den Rohrleitungsturm gestützt wird.

3. Flüssiggastanker (1) nach Anspruch 2, wobei
der strömungsabwärtige Abschnitt (6b) der Gasrückführleitung (6) einen Überschussgaszuführabschnitt (62) beinhaltet, der in den Rohrleitungsturm (52) eingebracht ist und sich entlang dem Rohrleitungsturm von dem oberen Abschnitt des Tanks (5) zu einem Mittelabschnitt davon erstreckt, und
sich der Überschussgasausstoßabschnitt (66) von einer strömungsabwärtigen Seite des Überschussgaszuführabschnitts erstreckt und Überschussgas zur Außenseite des Rohrleitungsturms ausstößt.

4. Flüssiggastanker (1) nach Anspruch 2 oder 3, wobei
sich der Überschussgasausstoßabschnitt entlang einer Außenumfangsfläche des Rohrleitungsturms (52) erstreckt.

5. Flüssiggastanker (1) nach einem der Ansprüche 1 bis 4, wobei
der Überschussgasausstoßabschnitt (66) in einem Bereich in dem Tank (5) angeordnet ist, in dem eine Abwärtsströmung des Flüssiggases vorliegt, wenn sich der Tank in einem voll beladenen Zustand befindet.

6. Flüssiggastanker (1) nach einem der Ansprüche 1 bis 5, wobei
der Tank (5) ein MOSS-Tank ist.

7. Flüssiggastanker (1) nach einem der Ansprüche 1 bis 6, wobei
der gasbetriebene Motor (2) ein Schiffshauptmotor des Flüssiggastankers (1) ist.

## Revendications

1. Un transporteur de gaz liquéfié (1) comprenant :
une citerne (5) stockant le gaz liquéfié ;
un moteur alimenté au gaz (2), pour lequel du gaz d'évaporation est fourni en tant que carburant, le gaz d'évaporation étant généré lorsque le gaz liquéfié s'évapore à dans la citerne ;
une conduite d'alimentation en gaz (3),
à travers laquelle le gaz d'évaporation se trouve alimenté depuis la citerne vers le moteur alimenté au gaz ;
un compresseur de gaz (4) placé sur la ligne d'alimentation de gaz et configuré pour alimenter par pression le gaz d'évaporation vers le moteur alimenté au gaz ;
une conduite de retour du gaz (6) à travers laquelle l'excès de gaz qui n'a pas été envoyé via la conduite d'alimentation vers le moteur à gaz est redirigé vers la citerne ; et
une soupape de retour du gaz (71) configurée pour ouvrir et refermer la conduite de retour du gaz, **caractérisée en ce que** :
la conduite de retour de gaz inclut une partie de soufflage d'excès de gaz (66) pourvu d'une sortie de soufflage d'excès de gaz (67) positionné dans une partie centrale (Rm) de la citerne en position élevée, la sortie de soufflage d'excès de gaz étant configurée pour déverser l'excès de gaz depuis sortie de soufflage d'excès de gaz vers la partie centrale de la citerne.

2. Transporteur de gaz liquéfié (1) selon la revendication 1, dans lequel
la citerne (5) inclut un mât tubulaire (52) s'étendant depuis une partie supérieure de la citerne vers une partie inférieure de la citerne, et
une partie aval (6b) de la conduite de retour de gaz (6) est supportée par le mât tubulaire.

3. Transporteur de gaz liquéfié (1) selon la revendication 2, dans lequel
une partie aval (6b) de la conduite de retour de gaz (6) inclut une partie d'approvisionnement d'excès de gaz (62) qui est inséré dans le mât tubulaire (52) et qui s'étend le long du tube depuis la partie supérieure vers une partie centrale de la citerne (5) et
la partie de soufflage d'excès de gaz (66) s'étend depuis un côté aval de la partie d'approvisionnement d'excès de gaz et souffle l'excès de gaz à l'extérieur du mât tubulaire.

4. Transporteur de gaz liquéfié (1) selon les revendications 2 ou 3, dans lequel
la partie de soufflage d'excès de gaz s'étend le long de la surface périphérique du mât tubulaire (52).

5. Transporteur de gaz liquéfié (1) selon l'une quelconque des revendications 1 à 4, dans lequel
la partie de soufflage d'excès de gaz (66) est positionnée dans une partie dans la citerne (5), partie dans laquelle un flux aval de gaz liquéfié est présent lorsque la citerne est dans un état complètement rempli.

6. Transporteur de gaz liquéfié (1) selon l'une quelconque des revendications 1 à 5, dans lequel
la citerne est une citerne MOSS.

7. Transporteur de gaz liquéfié (1) selon l'une quelconque des revendications 1 à 6, dans lequel
le moteur alimenté au gaz (2) est un moteur marin principal du transporteur de gaz liquéfié.
